# EUROPEAN PATENT APPLICATION

(11) **EP 4 762 964 A1**
(43) Date of publication of application: **24.06.2026**
(21) Application number: 24222934.2
(22) Date of filing: 23.12.2024
(51) Int. Cl.: A41D 1/00, H04B 1/3827, H04R 1/08, A45F 5/00, H04M 1/04

(54) **INTERCOM UNIT**

(71) Applicant: FalCom A/S, 2750 Ballerup (DK)
(72) Inventor: Nordstrøm, Morten, 2750 Ballerup (DK); Morton, Alistair, 2750 Ballerup (DK)
(74) Representative: GN Store Nord A/S

(57) **Abstract**

An intercom unit (1) adapted to be removably secured to a strap segment (14). The intercom unit (1) comprises a recess (15) in a front side (10), and a through hole (3). A yoke (4) is releasably fitted in the recess (15). An elastic cord (5) extends through the through hole (3) and is attached to the yoke (4) so that it together with the yoke (4) constitutes a loop (13) with a first loop segment (13a) and a second loop segment (13b). In a first attachment mode, the first loop segment (13a) at a first side wall (12a) extends around the strap segment (14) and the second loop segment (13b) at a second side wall (12b) extends around the strap segment (14).

## Description

### FIELD OF THE INVENTION

The invention relates in general to communication solutions for special operations, military, law enforcement and security personnel who all depend on optimal perception in extreme environments. The present invention relates more specifically to a control unit for a body worn communication system.

### BACKGROUND OF THE INVENTION

In combat and/or emergency situations, it may be desirable for a user to protect his/her hearing while enabling the user to communicate with others via radio communication. Therefore, soldiers Military and Law Enforcement Special Operations units wear communication systems, which should be reliable and easy to use.

WO19222648 A1 discloses a body worn communication system comprising a radio, a headset and a control unit connected to the headset and the radio. The control unit is a so-called PTT (push-to-talk) device, which is removably coupled to a strap extending across a user's chest, so it is quickly accessible by at least one hand. The strap can be a part of a grid of webbing.

A Pouch Attachment Ladder System (PALS) is a grid of webbing used to attach smaller equipment onto load-bearing platforms, such as vests and/or backpacks. The PALS may be used to attach items such as holsters, magazine pouches, radio pouches, knife sheathes, and other gear. A wide variety of pouches are commercially available, allowing users to customize their kit. PALS consists of a webbing sewn onto a load-bearing equipment and corresponding webbing and straps on the attachment. The straps are interwoven between the webbing on each of two pieces and finally snapped into place, making for a very secure fit which can be detached with moderate effort. New types are laser cut out of single piece fabric rather than webbing straps sewn onto fabric. Typically, Modular Lightweight Load-carrying Equipment (MOLLE) clips are used to attach the equipment to the PALS webbing.

The PALS grid consists of horizontal rows of 25 mm webbing, spaced 25 mm apart, and reattached to the backing at 38 mm intervals. Although the specification is for the stitches to be spaced 38 mm apart, stitching in the range 35-40 mm is considered acceptable in practice. Newer styles come in various laser cut fabric. The benefits often quoted for laser cut single piece style is significant weight saving especially on plate carriers/rigs and items with large amount of ladder area as well as less bulk. Another consideration is fabrics can be made in new popular patterns without need to source webbing in compatible shades including viewing conditions under night vision devices.

A PTT (Push-To-Talk) unit Model U94 /MS from the company TEA Headsets is a unit to be inserted between a communication unit and a headset and is provided with an alligator clip for attaching it to the PALS webbing. A disadvantage with this unit is, that it under certain circumstances can be detached from the PALS webbing, especially if the user is crawling or lying on with the chest on the ground.

### SUMMARY

An object of the invention is to provide a communication unit which can be attached to strap segments in a more flexible manner. According to the invention there is provided an intercom unit adapted to be removably secured to a strap segment, which intercom unit comprises a housing extending in first direction between a first housing end and a second housing end and comprising a front side, a rear side, a first sidewall and a second side wall, a recess in the front side, and a through hole extending in a second direction perpendicular to the first direction, a yoke which is releasably fitted in the recess, an elastic cord, which extends through the through hole and which is attached to the yoke so that it together with the yoke constitutes a loop, wherein a first loop segment extends between the housing and the yoke and a second loop segment extends between the housing and the yoke, and wherein the yoke is adapted to be guided behind the strap segment and fitted into the recess whereby the first loop segment at the first side wall extends around the strap segment and the second loop segment at the second side wall extends around the strap segment so that the intercom unit is attached to the strap segment in a first attachment mode.

According to one or more embodiments, the yoke is having a maximum cross-section in one plane that can fit inside a circle with a diameter of 21 mm. Hereby it is ensured, that the yoke can be guided behind a strap segment of standard Pouch Attachment Ladder System (PALS).

According to one or more embodiments, the yoke comprises a yoke front side which is essentially flush with the front side of the housing. Thus, the yoke will not create further protrusions which may be caught by straps or hit accidently which could cause undesired removal of the yoke from the recess.

According to one or more embodiments, the through hole is arranged adjacent and extending parallel with the recess.

According to one or more embodiments, the yoke is bendable and is adapted to be snapped into locking engagement with the recess.

According to one or more embodiments, the yoke is made of plastic material. Plastic material may be suitable for providing a suitable bendability.

According to one or more embodiments, a hook is provided at the second side wall, such that the first loop segment can be guided behind the strap segment from at the first side wall and around the hook, whereby the intercom unit is attached to the strap segment in a second attachment mode. Hereby, a more flexible attachment is possible, such that the user can arrange the control unit in the most optimal way, so that cables extending from the intercom unit points in the most optimal direction.

According to one or more embodiments, the hook is extending from the yoke. This can be an advantage for the following reasons: a) the hook can if broken be replaced by replacing the entire yoke, which is a small separate part. b) the yoke can be replaced with another yoke comprising a hook arranged in a different way, f. ex. at the opposite end of the yoke, c) the yoke can be replaced with a yoke without a hook, if this is desired.

According to one or more embodiments, a part of the hook is displaced from the remainder of the yoke in the first direction in a direction towards the through hole. In this way force exerted on the yoke by the first loop segment is less prone to force the yoke out of the recess.

According to one or more embodiments, the intercom unit comprises at least one connecting port at the first housing end.

According to one or more embodiments, the intercom unit comprises at least one connecting port at the second housing end.

According to one or more embodiments, the intercom unit comprises two connecting ports at the first end and two connecting ports at the second end.

According to one or more embodiments, the intercom unit comprises at least a first button at the front side of the housing.

According to one or more embodiments, the intercom unit comprises a second button at the front side of the housing, and wherein the recess is located between the first button and the second button.

According to one or more embodiments, one or two cables extend from the second end and no cables extends from the first end.

### BRIEF DESCRIPTION OF THE FIGURES

Fig. 1 discloses a first user worn communication system,
Fig. 2 discloses a intercom unit according to a first embodiment of the invention removably attached to a strap segment of a plate carrier in a first attachment mode,
Fig. 3 is a front view a of the intercom unit according to the first embodiment,
Fig. 4 is a side view of the intercom unit according to the first embodiment attached to a strap segment in the first attachment mode,
Fig. 5 discloses the intercom unit according to the first embodiment attached in a second attachment mode to a strap of a plate carrier,
Fig. 6 is a cross-sectional view through the intercom unit according to the first embodiment attached to a strap in the second attachment mode,
Fig. 7 is a front view of an intercom unit according to a second embodiment with a yoke releasably attached in a recess,
Fig. 8 is a front view of the intercom unit according to the second embodiment with the yoke released from the recess,
Fig. 9 discloses the intercom unit according to the second embodiment of the invention removably attached to a strap segment of a plate carrier in a first attachment mode,
Fig. 10 discloses the intercom unit according to the second embodiment of the invention removably attached to a strap segment of a plate carrier in a second attachment mode,
Fig. 11 is a side view of the intercom unit 1 according to the first embodiment in the second attachment mode, and
Fig. 12 is a side view of the intercom unit according to the second embodiment in the second attachment mode.

### DETAILED DESCRIPTION OF THE INVENTION

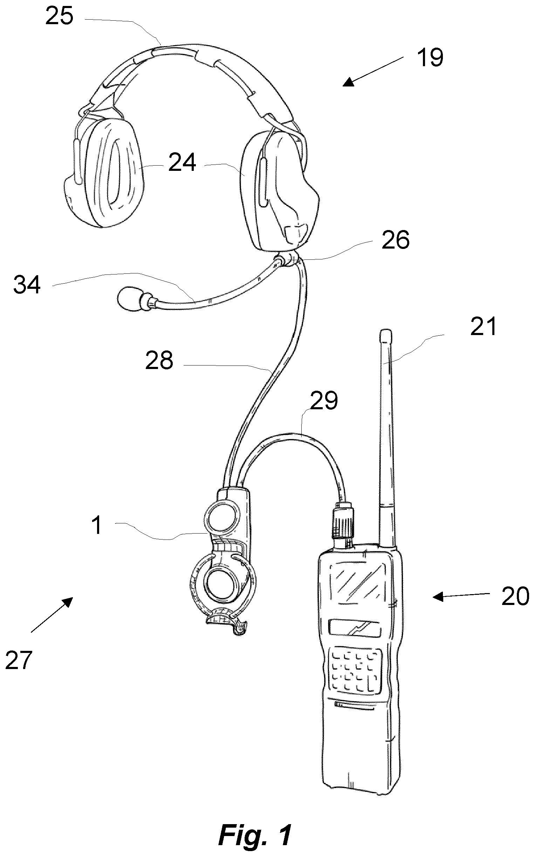

Figure 1 discloses a user worn communication system 27. The communication system 27 comprises a radio unit 20, a headset 19 and an intercom unit 1. At first cable 28 connects the intercom unit 1 to the headset 19 and a second cable 29 connects the intercom unit 1 to the radio unit 20. The headset 19 comprises two earphones 24 and a headband 25 connecting these. A microphone arm 34 extends from one of the earphones 24 at a headset connector 26. The radio unit 20 comprises an antenna 21 for wireless communication. During use the headset 19 is worn by the user's head and the intercom unit 1 and the radio unit 20 are worn on the body.

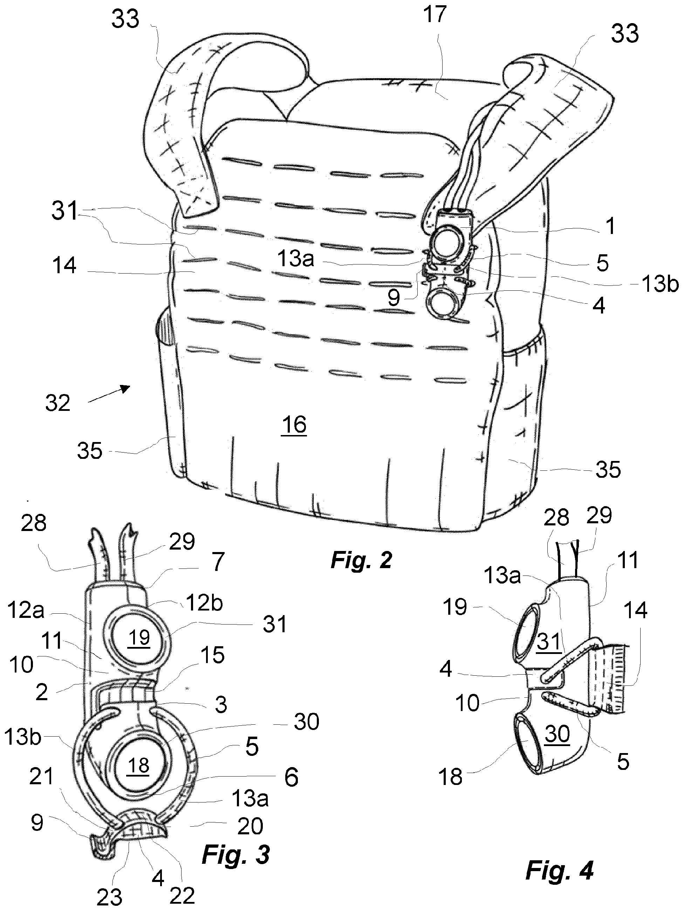

Figure 2 shows a plate carrier 32 which is a kind of vest that can hold protecting armor plates, tactical gear, and communication equipment. The plate carrier 32 comprises a front panel 16, a back panel 17, two side panels 35 and two shoulder straps 33. The front panel 16 comprises a PALS webbing with several strap segments 14. This PALS webbing is provided by laser cut fabric whereby strap segments 14 between line shaped cut-outs 31 are created. According to the standard the length of the cut-outs 31 is approximately 35-40 mm and the vertical distance between the cut-outs 31 is approximately 25 mm. In other versions of PALS webbing the strap segments 14 are provided by straps in the form of webbings with a width of 25 mm, arranged in parallel with a 25 mm distance from each other and stitched to the panel with intervals of approximately 38 mm. An intercom unit 1 is removably secured to the plate carrier 32 in a first attachment mode, which will be described closer in the following. The intercom unit 1 is a so-called PTT (push-to-talk) device 1 and comprises two push buttons 18, 19, which in the secured position of the PTT device 1 are easy to access by the user wearing the plate carrier 32, even with gloves. The PTT device 1 is prevented from being moved in its vertical direction as it is attached to a strap segment 14 by means of an elastic cord 5 creating two loop segments 13a, 13b, which will be further described in the following.

Fig. 3 shows the intercom unit 1 according to a first embodiment and released from the plate carrier 32. The intercom unit 1 comprises a housing 2 with a first housing end 6 and a second housing end 7, two side walls 12a, 12b, a front side 10 and a rear side 11. The first and second cables 28, 29 extend from the second housing end 7. A first protrusion 30 and a second protrusion 31 extend from the front side 10. The push button 18 is located at the free end of the first protrusion 30 and the push button 19 is located at the free end of the second protrusion 31. A recess 15 is provided in the front side 10 between the two protrusions 30, 31. A through hole 3 is provided in the housing 2 between the recess 15 and the first protrusion 30. The elastic cord 5 extends through the through hole 3. A yoke 4 which is adapted the fit in the recess 15 is provided with a first through yoke hole 20, a second through yoke hole 21 and a hook 9. The free ends of the elastic cord 5 is guided through the yoke holes 20, 21 and provided with knobs, which are not visible in Fig. 3, so they cannot slip out of the holes 20, 21. Hereby a first loop segment 13a and a second loop segment 13b are created between the housing 2 and the yoke 4. The yoke 4 comprises a front side 22, which is essentially flush with the front side 10 of the housing 2, when the yoke 4 is seated in the recess 15. This can be seen in Fig. 4.

Fig. 4 is a side view of the intercom unit 1 according to the first embodiment attached to a strap segment 14 in the first attachment mode. The yoke 4 is guided behind the strap segment 14 and seated in the recess 15, whereby the intercom unit i1 s held firmly in place with the rear side 11 facing the front panel 16 of the plate carrier 32 and the push buttons 18, 19 being accessible for the wearer of the plate carrier 32. In the shown first attachment mode, the communication unit 1 is vertically directed with the cables 28, 29 pointing upwards. However, the intercom unit 1 could also be oriented so that the cables point downwards.

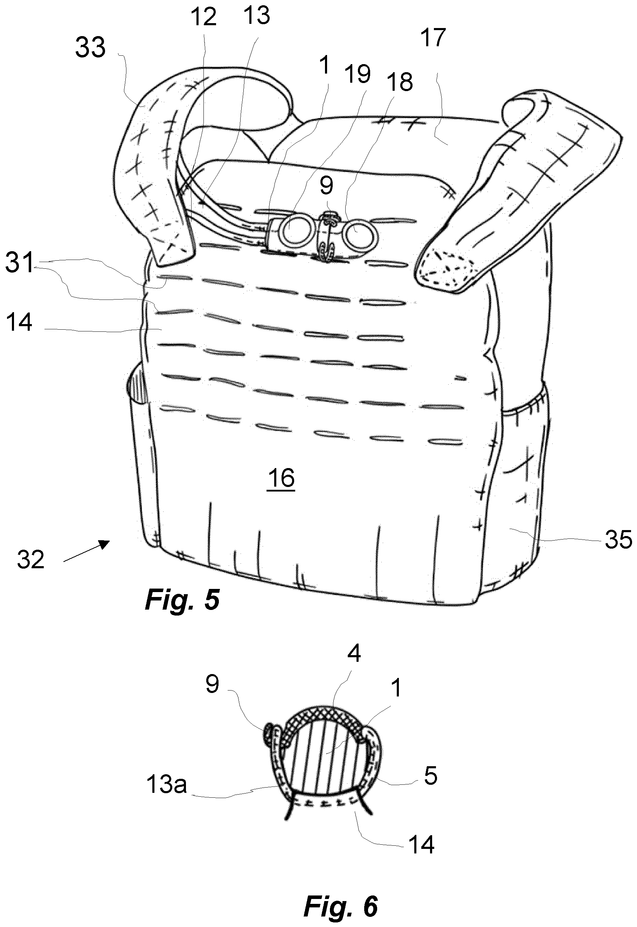

Fig. 5 discloses the intercom unit 1 according to the first embodiment attached in a second attachment mode to a strap segment of a plate carrier 32. In this second attachment mode, the communication unit 1 is horizontally directed with the cables 28, 29 pointing to the left. The control unit 1 could also be attached in the second attachment mode with the cables pointing to the right. Before attaching the communication unit 1, the cord 5 is pulled so that the length of first loop segment 13a is maximized and the length of the second loop segment 13b is minimized. Hereafter, the first loop segment 13a is guided behind the strap segment 14 and attached to the hook 9 of the yoke 4. It should be noted that the hook 9 in Fig. 5 is provided in the opposite end of the yoke 4 than in Figs. 3-5.

Fig. 6 is a cross-sectional view of the intercom unit 1 according to the first embodiment attached to a strap segment 14 in the second attachment mode. As it can be seen, the first loop segment 13a of the elastic cord 5 is guided behind the strap segment 14 and around the hook 9, whereby the communication unit 1 is held firmly on the front panel.

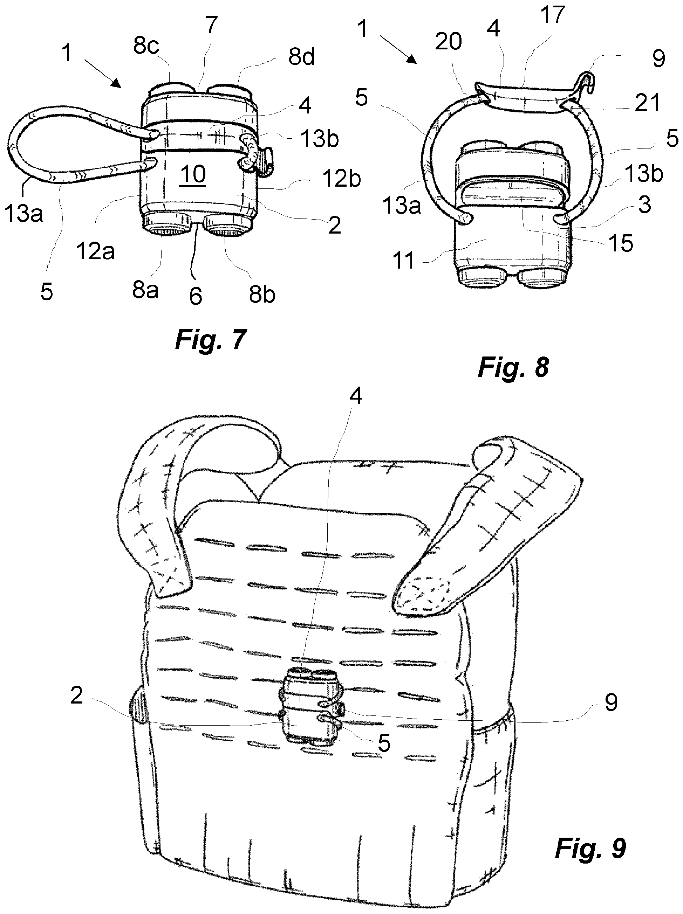

Fig. 7 is a front view of the intercom unit 1 according to a second embodiment with a yoke 4 releasably attached in a recess. Fig. 8 is a front view of the intercom unit according to the second embodiment with the yoke 4 released from the recess 15. This second embodiment of a communication unit 1 is a so-called dock with four cable connectors 8a, 8b, 8c, 8d. The communication unit 1 comprises a housing 2, a first housing end 6, a second housing end 7, two side walls 12a, 12b, a front side 10 and a rear side 11. Two connectors 8a, 8b are arranged at the first housing end 6 and two connectors 8c, 8d are arranged at the second housing end 7. Like the first embodiment, the communication unit 1 has a through hole 3 in the housing 2, through which an elastic cord 5 is guided. The free ends of the elastic cord 5 are attached inside the yoke 4, so that two loop segments 13a, 13b are formed between the housing 2 and the yoke 4. Like the first embodiment the yoke 4 has a hook 9 at one end.

Fig. 9 discloses the control unit 1 according to the second embodiment of the invention removably attached to a strap segment 14 of a plate carrier 32 in a first attachment mode. Like the first embodiment, the yoke 4 Is guided behind a strap segment 4 and seated in the recess whereby the communication unit 4 is held firmly in place. This communication unit 1 does not have any push buttons, but functions as a dock which can interconnect up to four devices via the four connectors 8a, 8b, 8c, 8d.

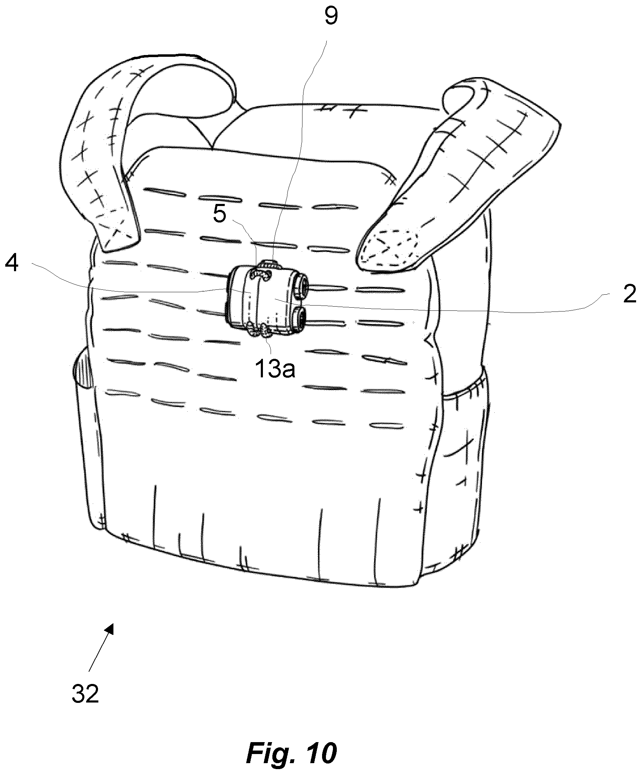

Fig. 10 discloses the control unit 1 according to the second embodiment of the invention removably attached to a strap segment of a plate carrier 32 in a second attachment mode. Here the elastic cord 5 is pulled in one direction to maximize the length of the first loop segment 13a and minimize the length of the second loop segment 13b as shown in Fig. 7, whereafter the first loop segment 13a is guided behind a strap segment 14 and about the hook 9 of the yoke 4.

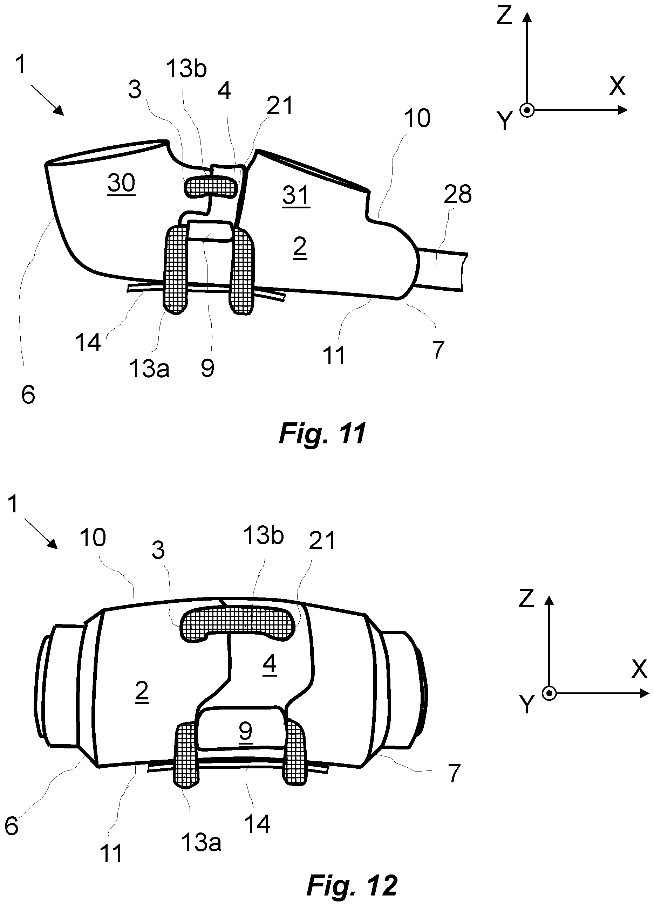

Fig. 11 discloses a side view of the intercom unit 1 according to the first embodiment in the second attachment mode. As it can be seen the hook 9 is extended along the longitudinal direction X between the first housing end 6 and second housing end 7 in the direction of the through hole 3, such that the forced exerted on the yoke 4 by the first loop segment 13a is less prone to force the yoke 4 out of the recess. The width of the main part of the yoke 4 in the first direction X is approximately 6 mm while the width of the hook part in the first direction X is approximately 10 mm. The elastic cord has a diameter of approximately 3 mm. The length of the yoke 4 in a second direction Y perpendicular to the first direction X is approximately 29 mm. The overall length of the communication unit 1 in the first direction X is about 75 mm and the overall width in the in the second direction Y is about 24 mm. The maximum height a third direction Z perpendicular to the first and second directions X, Y is about 26 mm.

Fig. 12 discloses a side view of the intercom unit 1 according to the second embodiment in the second attachment mode. Here the hook 9 is displaced about 4 mm along the first direction X between the first housing end 6 and second housing end 7 in the direction of the through hole 3, such that the forced exerted on the yoke 4 by the first loop segment 13a is less prone to force the yoke 4 out of the recess. The width of the main part of the yoke 4 in the first direction X is approximately 10 mm and the width of the hook part in the first direction X is also approximately 10 mm. The elastic cord has a diameter of approximately 3 mm. The length of the yoke 4 in the second direction Y is approximately 45 mm. The overall length of the communication unit 1 in the first direction X is about 47 mm and the overall width in the second direction Y is about 41 mm. The height in the direction Z is about 22 mm.

In both embodiments the yoke has a size so that it can be guided behind strap segment of a PALS grid, where the strap segments are less than 38 mm long and 25 mm high.

The length of the elastic cord should be chosen so that the communication unit is held firmly in place and not easy to detach. In this way, when attached in either the first or the second attachment mode, considerable force must be exercised by an object in order to release the yoke from the recess.

The intercom unit can have several forms. It can comprise several PTT buttons, f. ex. up to six PTT buttons. It may also comprise buttons for channel selection and volume control. It may also comprise more cables extending from both ends of the unit and/or it may comprise COM ports, to which cables can be connected.

### ITEMS

1. An intercom unit (1) adapted to be removably secured to a strap segment (14), which intercom unit (1) comprises
   a housing (2) extending in first direction (X) between a first housing end (6) and a second housing end (7) and comprising a front side (10), a rear side (11), a first sidewall (12a) and a second side wall (12b), a recess (15) in the front side (10), and a through hole (3) extending in a second direction (Z) perpendicular to the first direction (X),
   a yoke (4) which is releasably fitted in the recess (15),
   an elastic cord (5), which extends through the through hole (3) and is attached to the yoke (4) so that it together with the yoke (4) constitutes a loop (13), so that a first loop segment (13a) extends between the housing (2) and the yoke (4) and a second loop segment (13b) extends between the housing 2 and the yoke (4), and wherein the yoke (4) is adapted to be guided behind the strap segment (14) and fitted into the recess (15) whereby the first loop segment (13a) at the first side wall (12a) extends around the strap segment (14) and the second loop segment (13b) at the second side wall (12b) extends around the strap segment (14) so that the intercom unit (1) is attached to the strap segment (14) in a first attachment mode.
2. An intercom unit (1) according to item 1, wherein the yoke 4 is having a maximum cross-section in one plane (XY) that can fit inside a circle with a diameter of 21 mm.
3. An intercom unit (1) according to any of the preceding items, wherein the yoke (4) comprises a yoke front side (17) which is essentially flush with the front side (10) of the housing (2).
4. An intercom unit 1 according to any of the preceding items, wherein the through hole (3) is arranged adjacent and extending parallel with the recess (15).
5. An intercom unit (1) according to any of the preceding items, wherein the yoke (4) is bendable and is adapted to be snapped into locking engagement with the recess (15).
6. An intercom unit (1) according to item 5, wherein the yoke (4) and the recess (15) are shaped so that a temporarily deformation of the yoke (4) is required to release it from the recess (15)
7. An intercom unit (1) according to item 5 or 6, wherein the yoke 4 is made of plastic material.
8. An intercom unit (1) according to any of the preceding items, wherein a hook (9) is provided at the second side wall (12b), such that the first loop segment (13a) can be guided behind the strap segment (14) from at the first side wall (12a) and around the hook (9), whereby the intercom unit (1) is attached to the strap segment (14) in a second attachment mode.
9. An intercom unit (1) according to any of the preceding items, wherein the hook (9) is extending from the yoke (4).
10. An intercom unit (1) according to any of the preceding items, wherein the hook (9) is extending from an end of the yoke (4).
11. An intercom unit 1 according to item 10, wherein a part of the hook (9) is displaced from the remainder of the yoke (4) in the first direction (X) in a direction towards the through hole (3).
12. An intercom unit (1) according to any of the preceding items, comprising at least one connecting port (8a) at the first housing end (6).
13. An intercom unit (1) according to item 12 comprising at least one connecting port (8c) at the second housing end (7).
14. An intercom unit (1) according to item 12 or 13 comprising two connecting ports (8a, 8b) at the first end (6) and two connecting ports (8c, 8d) at the second end 7.
15. An intercom unit (1) according to any of the preceding items comprising at least a first button (18) at the front side (10) of the housing (2).
16. An intercom unit (1) according to item 15 comprising a second button (19) at the front side (10) of the housing (2), and wherein the recess (15) is located between the first button (18) and the second button (19).
17. An intercom unit (1) according to item 15 or 16, wherein one or two cables (28, 29) extend from the second end (7) and no cables extends from the first end (6).

### LIST OF REFERENCES

- 1: Intercom unit
- 2: housing
- 3: through hole
- 4: yoke
- 5: elastic cord
- 6: first housing end
- 7: second housing end
- 8: connectors
- 9: hook
- 10: front side
- 11: rear side
- 12: side walls (first sidewall 12a, second side wall 12b)
- 13: loop segments (first loop segment 13a, second loop segment 13b)
- 14: strap segment
- 15: recess
- 16: front panel
- 17: back panel
- 18: first button
- 19: second button
- 20: first yoke hole
- 21: second yoke hole
- 22: yoke front side
- 23: yoke rear side
- 24: earphone
- 25: headband
- 26: headset connector
- 27: communication system
- 28: first cable
- 29: second cable
- 30: first protrusion
- 31: second protrusion
- 32: plate carrier
- 33: shoulder strap

## Claims

1. An intercom unit (1) adapted to be removably secured to a strap segment (14), which intercom unit (1) comprises
a housing (2) extending in a first direction (X) between a first housing end (6) and a second housing end (7) and comprising a front side (10), a rear side (11), a first sidewall (12a) and a second side wall (12b), a recess (15) in the front side (10), and a through hole (3) extending in a second direction (Z) perpendicular to the first direction (X),
a yoke (4) which is releasably fitted in the recess (15),
an elastic cord (5), which extends through the through hole (3) and which is attached to the yoke (4) so that it together with the yoke (4) constitutes a loop (13), wherein a first loop segment (13a) extends between the housing (2) and the yoke (4) and a second loop segment (13b) extends between the housing (2) and the yoke (4), and wherein the yoke (4) is adapted to be guided behind the strap segment (14) and fitted into the recess (15) whereby the first loop segment (13a) at the first side wall (12a) extends around the strap segment (14) and the second loop segment (13b) at the second side wall (12b) extends around the strap segment (14) so that the intercom unit (1) is attached to the strap segment (14) in a first attachment mode.

2. An intercom unit (1) according to claim 1, wherein the yoke (4) is having a maximum cross-section in one plane (XZ) that can fit inside a circle with a diameter of 21 mm.

3. An intercom unit (1) according to any of the preceding claims, wherein the yoke (4) comprises a yoke front side (22) which is essentially flush with the front side (10) of the housing (2).

4. An intercom unit (1) according to any of the preceding claims, wherein the through hole (3) is arranged adjacent and extending parallel with the recess (15).

5. An intercom unit (1) according to any of the preceding claims, wherein the yoke (4) is bendable and is adapted to be snapped into locking engagement with the recess (15).

6. An intercom unit (1) according claim 5, wherein the yoke (4) is made of plastic material.

7. An intercom unit (1) according to any of the preceding claims, wherein a hook (9) is provided at the second side wall (12b), such that the first loop segment (13a) can be guided behind the strap segment (14) from at the first side wall (12a) and around the hook (9), whereby the intercom unit (1) is attached to the strap segment (14) in a second attachment mode.

8. An intercom unit (1) according to any of the preceding claims, wherein the hook (9) is extending from the yoke (4).

9. An intercom unit 1 according to claim 8, wherein a part of the hook (9) is displaced from the remainder of the yoke (4) in the first direction (X) in a direction towards the through hole (3).

10. An intercom unit (1) according any of the preceding claims, comprising at least one connecting port (8a) at the first housing end (6).

11. An intercom unit (1) according to claim 10 comprising at least one connecting port (8c) at the second housing end (7).

12. An intercom unit (1) according to claim 10 comprising two connecting ports (8a, 8b) at the first end (6) and two connecting ports (8c, 8d) at the second end 7.

13. An intercom unit (1) according to any of the preceding claims, comprising at least a first button (18) at the front side (10) of the housing (2).

14. An intercom unit (1) according to claim 13 comprising a second button (19) at the front side (10) of the housing (2), and wherein the recess (15) is located between the first button (18) and the second button (19).

15. An intercom unit (1) according to claim 13 or 1, wherein one or two cables (28, 29) extend from the second end (7) and no cables extends from the first end (6).
